# EUROPEAN PATENT APPLICATION

(11) **EP 3 258 364 A1**
(43) Date of publication of application: **20.12.2017**
(21) Application number: 16749463.2
(22) Date of filing: 11.02.2016
(51) Int. Cl.: G06F 3/0488, G06F 3/0481, G06F 3/048

(54) **DISPLAY DEVICE, DISPLAY METHOD AND COMPUTER-READABLE RECORDING MEDIUM**

(30) Priority: 11.02.2015 KR 20150020730
(71) Applicant: Samsung Electronics Co., Ltd., Suwon-si, Gyeonggi-do 16677 (KR)
(72) Inventor: KIM, Sun-kyung, Busan 49516 (KR); PETEICHUK, Aleksandra, Tyachiv Zakarpatska oblast 90500 (UA); GAGARINA, Nataliia, Kiev 03186 (UA); KULIKOVSKYI, Valentyn, Kiev 02139 (UA)
(74) Representative: HGF Limited
(86) International application number: PCT/KR2016/001374
(87) International publication number: WO 2016/129923

(57) **Abstract**

A display device is disclosed. The display device comprises: a display unit having a screen including a first region for displaying an image and a second region into which a user's touch is inputted; a sensing unit for sensing the user's touch on the second region; and a control unit for determining the length of the user's input by analyzing the sensed user's touch, and controlling the display unit such that the display unit displays, on the screen, a part or all of a plurality of icons corresponding respectively to a plurality of applications, wherein the number of icons displayed on the screen is dynamically determined according to the determined length of the user's input.

## Description

### Technical Field

The present invention relates to a display device and a display method, and more particularly, to a display device and a display method which variably determine the number of icons to be displayed in a screen according to a length of a user input by a user touch.

### Background Art

With the developments of electronic technology, various types of display devices have been developed and propagated. In particular, in recent years, the use of display devices which support various applications such as smart phones or tablet personal computers (PCs) has been rapidly increased.

To execute applications installed in such display devices, execution icons for executing the applications are typically selected. However, it is troublesome to return to a main screen to select the execution icon. Further, since a large number of execution icons are displayed in the main screen of the display device, it takes a lot of time for the user to search for a desired icon.

### Detailed description of the invention

### Technical Problem

The present invention has been made in view of the above problems, and the present invention relates to a display device and a display method, and more particularly, to a display device and a display method which variably determine the number of icons to be displayed in a screen according to a length of a user input by a user touch.

### Technical Solution

To obtain the above-described object, the present invention is to provide a display device including a display unit mounted with a screen having a first region in which an image is displayed and a second region to which a user touch is input, a sensing unit configured to detect the user touch on the second region, and a control unit configured to determine a length of a user input by analyzing the detected user touch and control the display unit to display a portion or all of a plurality of icons corresponding to a plurality of applications on the screen. The number of icons displayed in the screen may be variably determined according to the determined length of the user input.

The control unit may control the display unit to display the portion or all of the plurality of icons on an image displayed in the first region.

The control unit may divide the plurality of icons into a plurality of icon groups according to a preset criterion and control the display unit to display a portion or all of the plurality of divided icon groups in the screen. The number of icon groups displayed in the screen may be variably determined according to the determined length of the user input.

The preset criterion may be at least one of use frequency of an application, a time elapsed from a last use time of the application, a consumed amount of a battery in execution of the application, and a function of the application.

The first region may include a plurality of regions divided by a plurality of boundary lines parallel to an upper end of the screen. The control unit may determine a priority for the plurality of icon groups and control the display unit to display the priority-determined icon groups by sequentially adding the priority-determined icon groups according to the priority from an uppermost region of the plurality of regions to a lowermost region thereof in response to the length of the user input being increased.

The control unit may determine the priority of the plurality of divided icon groups based on at least one of use frequency of a divided icon group, a time elapsed from a last use time of the divided icon group, and user setting.

The screen may include an activation region for activating the second region and the control unit may activate the second region in response to the user touch being input to the activation region for a preset time.

The screen may be divided into a flat region and a bended region and the first region may be formed in the flat region and the second region may be formed in the bended region.

The control unit may control the display unit to display the portion or all of the plurality of icons in the second region.

The present invention is to provide a display method of a display device mounted with a screen having a first region in which an image is displayed and a second region to which a user touch is input, the display method including the steps of detecting the user touch on the second region, determining a length of a user input by analyzing the detected user touch, and displaying a portion or all of a plurality of icons corresponding to a plurality of applications in the screen. The number of icons displayed in the screen may be variably determined according to the determined length of the user input.

The step of displaying the portion or all of the plurality of icons may include displaying the portion or all of the plurality of icons on the image displayed in the first region.

The display method may further include the steps of dividing the plurality of icons into a plurality of icon groups according to a preset criterion and displaying a portion or all of the plurality of divided icon groups in the screen. The number of icon groups displayed in the screen may be variably determined according to the determined length of the user input.

The preset criterion may be at least one of use frequency of an application, a time elapsed from a last use time of the application, a consumed amount of a battery in execution of the application, and a function of the application.

The first region may include a plurality of regions divided by a plurality of boundary lines parallel to an upper end of the screen. The step of displaying the portion or all of the plurality of divided icon groups may include determining a priority for the plurality of icon groups and displaying the priority-determined icon groups by sequentially adding the priority-determined icon groups according to the priority from an uppermost region of the plurality of regions to a lowermost region thereof in response to the length of the user input being increased.

The step of displaying the portion or all of the plurality of divided icon groups may include determining a priority of the plurality of divided icon groups based on at least one of use frequency of a divided icon group, a time elapsed from a last use time of the divided icon group, and user setting.

The display method may further include activating the second region in response to a user touch being input to an activation region for a preset time.

The screen may be divided into a flat region and a bended region and the first region may be formed in the flat region and the second region may be formed in the bended region.

The step of displaying the portion or all of the plurality of icons may include displaying the portion or all of the plurality of icons in the second region.

The present invention is to provide a non-transitory computer-readable recording medium including a program for executing a display method of a display device mounted with a screen having a first region in which an image is displayed and a second region to which a user touch is input, the display method including the steps of detecting the user touch on the second region, determining a length of a user input by analyzing the detected user touch, and displaying a portion or all of a plurality of icons corresponding to a plurality of application in the screen. The number of icons displayed in the screen may be variably determined according to the determined length of the user input.

### Description of Drawings

FIG. 1 is a block diagram illustrating a configuration of a display device according to an embodiment of the present invention,
FIGS. 2A and 2B are diagrams illustrating methods for activating a second region to which a user touch is input according to an embodiment of the present invention,
FIGS. 3A and 3B are diagrams illustrating methods for determining a length of a user input according to a user touch according to an embodiment of the present invention,
FIG. 4 is a diagram illustrating an example that the variable number of icons are displayed in a screen according to a length of a user input according to an embodiment of the present invention,
FIG. 5 is a diagram illustrating a method for executing an application by selecting a displayed icon according to an embodiment of the present invention,
FIG. 6 is a diagram illustrating a method for returning to an existing screen without execution of an application according to an embodiment of the present invention,
FIG. 7 is a diagram illustrating an example that an icon is displayed on an image displayed in a first region according to an embodiment of the present invention,
FIG. 8 is a diagram illustrating an example that the variable number of icon groups are displayed according to a length of a user input according to an embodiment of the present invention,
FIGS. 9A to 9C are diagrams illustrating methods for dividing a plurality of icons into icon groups according to an embodiment of the present invention,
FIGS. 10A and 10B are diagrams examples that a plurality of icon groups are displayed by sequentially adding the plurality of icon groups to a plurality of regions of a first region according to a priority according to an embodiment of the present invention,
FIG. 11 is a diagram illustrating a method for determining a priority of a plurality of icon groups according to an embodiment of the present invention,
FIG. 12 is a diagram illustrating a method for viewing a plurality of icons included in one icon group according to an embodiment of the present invention,
FIGS. 13 to 15 are diagrams illustrating configuration examples of a display device mounted with a bended touch screen according to an embodiment of the present invention,
FIG. 16 is a diagram illustrating an example that the variable number of icons are displayed in a screen using a bended region of a bended touch screen according to an embodiment of the present invention,
FIG. 17 is a diagram illustrating an example that the variable number of icons are displayed in a bended region of a bended touch screen according to an embodiment of the present invention,
FIG. 18 is a diagram illustrating screen change of a bended region according to a user touch,
FIG. 19 is a diagram illustrating a configuration example of a bended touch screen according to another embodiment of the present invention, and
FIG. 20 is a flowchart illustrating a display method according to an embodiment of the present invention.

### Mode for invention

Hereinafter, the present invention will be described in detail with reference to accompanying drawings.

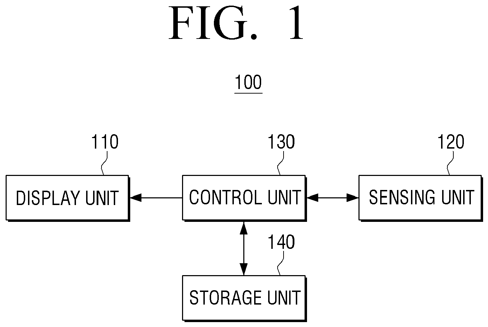

FIG. 1 is a block diagram illustrating a configuration of a display device according to an embodiment of the present invention.

Referring to FIG. 1, a display device 100 includes a display unit 110, a sensing unit 120, and a control unit 130.

The display unit 110 displays an image in a first region of a screen mounted on the display unit 110. Here, the first region refers to a region in which an image or an icon is displayed. For example, the display unit 110 may display various types of images such as a home image, an icon image, a list image, an application execution image, a web browser image, a content reproduction image, and the like.

Various objects such as an icon, an image, text, and the like may be further displayed in images displayed in the first region. Applications may match with portions of objects such as an icon. The user may instruct a desired control operation of the user by selecting an object using a finger of the user, a pen, and the like.

Various user touch operations are input to a second region of the screen mounted on the display unit 110. Here, the second region refers to a region to which a user touch is input to determine the number of icons displayed in the screen. For example, various user touch operations, for example, a drag operation for touching one point and then moving another point in a touch state, a rubbing operation for touching one point and then rubbing the one point, a long pressing operation for pressing one point for a critical time or more, a flicking operation for touching one point and then flicking fast to one direction, a tapping operation for slightly touting one point through a fingertip, and the like may be input to the second region of the seen mounted on the display unit 110.

The sensing unit 120 detects a user touch operation performed on the second region of the screen mounted on the display unit 110. For example, the sensing unit 120 may detect various operations such as a general touch operation for touching a screen using a finger of the user or other objects, a general hovering operation for approaching a finger and the like near the screen, a pen touch operation for touching the screen using a pen, a pen hovering operation for approaching a pen near the screen, and the like.

In response to the user touch being detected, the sensing unit 120 may notify the control unit 130 of information for the detected touch.

The control unit 130 may control the overall operation of the display device 100. For example, the control unit 110 may control operations of pieces of hardware provided in the display device 100 and support various types of functions by executing an operating system (O/S) or various types of applications stored in a storage unit 140.

Further, in response to the selection of one icon being detected through the sensing unit 120, the control unit 130 may perform a control operation corresponding to the selected icon.

The control unit 130 determines a length of a user input according to the detected user touch. For example, the control unit 130 may receive information for a user touch operation from the sensing unit 120 and calculate a length of the user input.

The control unit 130 controls the display unit 110 to display a portion or all of a plurality of icons corresponding to a plurality of applications in the screen mounted on the display unit 110. For example, the plurality of applications which perform various functions may be installed in the display device 100 and the icons for executing the plurality of applications may be presented in the display device 100. The control unit 130 may control the display unit 110 to display all the icons in the screen mounted on the display unit 110 or may control the display unit 110 to display the portion of the icons in the screen mounted on the display unit 110.

The control unit 130 variably controls the number of icons displayed in the screen mounted on the display unit 110 according to the length of the user input. For example, the control unit 130 may increase the number of icons displayed in the screen according to increase of the length of the user input in a process of displaying the icons in the screen. In a process of removing the icon displayed in the screen from the screen, the control unit 130 may reduce the number of icons displayed in the screen according to the increase of the length of the user input.

The control unit 130 may determine a priority of a plurality of ions to be displayed in the screen and control the display unit 110 to sequentially display the priority-determined icons in the screen according to the length of the user input. For example, the control unit 130 may determine the priority of the icons to be displayed in the screen corresponding to the applications on the basis of at least one of use frequency of an application, a time elapsed from a last use time of the application, and a consumed amount of a battery in execution of the application. The control unit1 130 may sequentially display the priority-determined icons on the screen according to the increase of the length of the user input.

The control unit 130 may control the display unit 110 to display a portion or all of the plurality of icons on an image displayed in the first region. For example, various types of images such as a home image, an icon image, a list image, an application execution image, a web browser image, a content reproduction image, and the like may be displayed in the first region and the control unit 130 may control the display unit 110 to display a portion or all of the plurality of icons on a currently displayed image in a state that the above-described types of images are displayed.

The control unit 130 may divide the plurality of icons into a plurality of icon groups according to a preset criterion and control the display unit 110 to display a portion or all of the plurality of divided icon groups. For example, the control unit 130 may generate the plurality of icon groups by dividing the plurality of icons for executing the plurality of applications installed in the display device 100 according to the preset criterion. The control unit 130 may control the display unit 110 to display the plurality of generated icon groups in the screen in group units.

In this example, the number of icon groups displayed in the screen may be variably determined according to the length of the user input. For example, in a process of displaying the icon groups in the screen, the control unit 130 may increase the number of icon groups displayed in the screen according to the increase of the length of the user input. Further, in a process of removing the icon groups displayed on the screen from the screen, the control unit 130 may reduce the number of icons displayed in the screen according to the increase of the length of the user input.

In this example, the preset criterion may be use frequency of an application. For example, the control unit 130 may determine the number of times that an application is used per unit time and calculate the use frequency of the application according to the determined result. The control unit 130 may generate icon groups by grouping icons corresponding to applications having a similar number of use times per unit time into one. Accordingly, the icons corresponding to the plurality of applications installed in the display device 100 may be divided into the plurality of icon groups.

Further, the preset criterion may be a time elapsed from a last use time of an application. For example, the control unit 130 may determine the time elapsed from the last use time of the application. The control unit 130 may generate icon groups by grouping icons corresponding to applications having a similar time elapsed from a last use time of an application into one. Accordingly, the icons corresponding to the plurality of applications installed in the display device 100 may be divided into the plurality of icon groups.

Further, the preset criterion may be a consumed amount of a battery in execution of an application. For example, the control unit 130 may calculate the consumed amount of a battery in execution of the application. The control unit 130 may generate icon groups by grouping icons corresponding to applications having a similar consumed amount of a battery in execution of an application into one. Accordingly, the icons corresponding to the plurality of applications installed in the display device 100 may be divided into the plurality of icon groups.

Further, the preset criterion may be a function of an application corresponding to an icon. For example, the control unit 130 may generate icon groups by dividing icons corresponding to a plurality of applications according to a category based on functions performed through the plurality of applications. Accordingly, the icons corresponding to the plurality of applications installed in the display device 100 may be divided into the plurality of icon groups.

The control unit 130 may determine a priority of the plurality of icon groups. For example, the control unit 130 may determine the priority of the icon groups divided based on at least one of the use frequency and the time elapsed from the last use time of the divided icon group and user setting.

In this example, the control unit 130 may control the display unit 110 to display the priority-determined icon groups by sequentially adding the priority-determined icon groups from an uppermost region among a plurality of regions to a lowermost region thereof according to the priority in response to the length of the user input being increased.

For example, the first region may be divided through a plurality of boundary lines parallel to an upper end of the screen. The first region may be a region in which an image or an icon is displayed. In this example, the first region may be divided into a plurality of regions through the boundary lines parallel to the upper end of the screen.

In this example, the control unit 130 may display an icon group having the highest priority in the uppermost region of the plurality of regions into which the first region is divided in response to the length of the user input being a preset length. The control unit 130 may display an icon group having a second priority in a region just below the uppermost region in response to the length of the user input being further increased by the preset length. The control unit 130 may control the display unit 110 to display the priority-determined icon groups by sequentially adding the priority-determined icon groups from the uppermost region among the plurality of region to the lowermost region thereof according to the priority.

The control unit 130 may activate the second region in response to the user touch being input to an activation region for a preset time. For example, the user may activate the second region to display the icon in the screen. The screen may include the activation region for activating the second region. The control unit 130 may control the second region to be activated and to receive the user touch for displaying the icon in the second region in response to the user touch being input to the activation region for a preset time.

The screen mounded on the display unit 110 may be divided into a flat region and a bended region. The first region may be formed in the fat region and the second region may be formed in the bended region. For example, the screen mounted on the display device 100 may be a bended touch screen having a flat region and a bended region. In this example, the first region may be formed in the flat region of the bended touch screen and the second region may be formed in the bended region of the bended touch screen.

In this example, the control unit 130 may control the display unit 110 to display a portion or all of the plurality of icons in the second region. For example, the control unit 130 may display the icon in the bended region of the bended touch screen and the number of icons displayed in the bended region may be variably determined according to a length of the user input.

The storage unit 140 stores O/S, various types of applications, widget program, data, and the like. The control unit 130 may be driven through O/S stored in the storage unit 140, execute the various types of applications or the widget program selected through the user, and perform the function corresponding to the executed application or widget program.

It has been described in the exemplary embodiment that the display device 100 is a portable phone, but this is not limited thereto and the display device 100 may be applied to any device which detects the user touch and displays the screen.

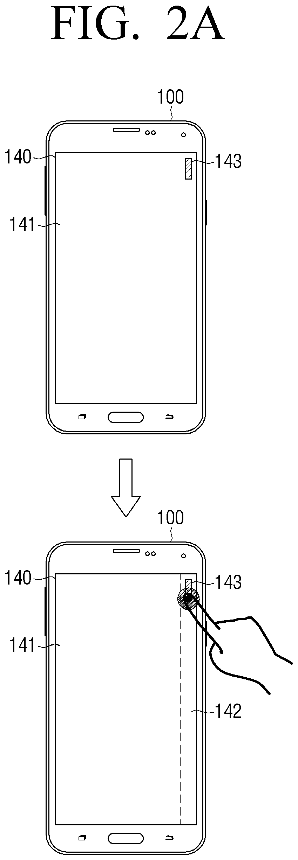

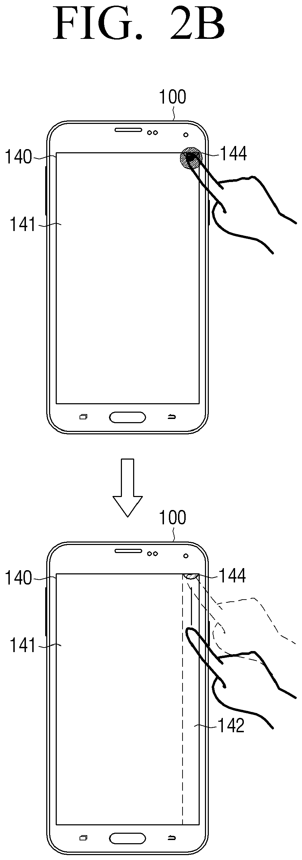

FIGS. 2A and 2B are diagrams illustrating methods for activating a second region to which a user touch is input according to an embodiment of the present invention.

Referring to FIG. 2A, the screen 140 of the display device 100 may include a first region 141, a second region 142, and an activation region 143. The activation region 143 may be a region which may activate the second region 142 to which the user touch for displaying the variable number of icons is input.

The second region 142 may be activated through a user touch on the activation region 143 for a preset time.

Various types of user touches for operating the display device 100 may be input to the screen 140. Accordingly, it is necessary to divide the user touches into a general user touch and a user touch for displaying the icon. Accordingly, the second region 142 may be normally maintained in an inactivated state and in response to the activation region 143 being touched, the second region 142 may be activated and receive the user touch for displaying the icon.

The activation region 143 may be displayed in a translucent specific color. The activation region 143 may not be displayed so that the activation region 143 is not visually recognized.

In response to the activation region 143 being touched through the user for a preset time, the second region 142 is activated. Accordingly, in response to the activation region 143 being touched for less than the preset time, the touch may be recognized not as a touch for activating the second region but as a general touch for operating the display device 100.

In response to the second region 142 being activated, the user may be notified of the activation of the second region 142 through vibration alarm of the display device. In response to the second region 142 being activated, the user may be notified of the activation of the second region 142 through flickering of the second region 142 for a fixed time, a method of displaying the second region 142 with a translucent specific color during the activation of the second region 142, and the like.

Referring to FIG. 2B, the second region 142 may be activated through touch on the activation region 144 and drag of the user.

For example, the user may activate the second region 142 through a method for touching on a portion of the activation region 144 and performing dragging to a specific direction in a state that the portion of the activation region 144 is touched. It has been described in the embodiment that the second region 142 is activated through touch of the activation region 144 and down dragging, but this is not limited thereto. The drag direction may be variously changed according to a position of the activation region 144.

In response to the second activation region 142 being activated, the user may be notified of the activation of the second region through the vibration alarm of the display device. In response to the second activation region 142 being activated, the user may be informed of the activation of the second region 142 through flickering of the second region 142 for a fixed time, a method of displaying the second region 142 with a translucent specific color during the activation of the second region 142, and the like

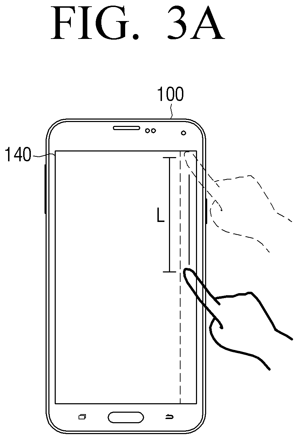

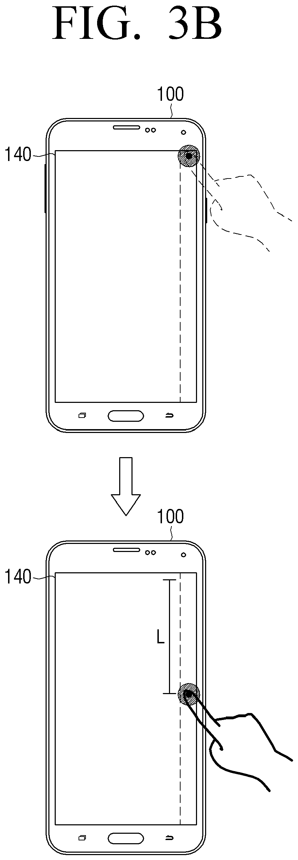

The activation operations in FIGS. 2A and 2B may be performed in connection with the user touch operation for displaying an icon to be described later in FIG. 3. For example, in the embodiment of the FIG. 2A, the activation operation may be performed in connection with the user touch operation for displaying the icon by performing an operation of touching the activation region 143 for a preset time and then dragging downward. In the embodiment of the FIG. 2B, the activation operation may be performed in connection with the user touch operation for displaying the icon by performing an operation of touching the activation region 144 and then dragging downward. Accordingly, the number of user operations may be reduced and the time consumed in searching for a desired icon may be reduced.

FIGS. 3A and 3B are diagram illustrating methods for determining a length of a user input according to a user touch according to an embodiment of the present invention.

Referring to FIG. 3A, the user input for displaying an icon may be input by dragging the second region through the user. The sensing unit 120 may transfer user touch information to the control unit 130 and the control unit 130 may calculate a length L of the user input using the received user touch information. For example, the dragging operation from a first point being performed through the user, the control unit 130 may calculate the length L of the user input by calculating a distance between the first point on which the first user touch is performed and a current user touch point.

Referring to FIG. 3B, the user input for displaying an icon may be input by touching the first point of the second region and then touching a second point through the user. The sensing unit 120 may transfer user touch information to the control unit 130 and the control unit 130 may calculate a length L of the user input using the received user touch information. For example, in response to the second point being touched through the user after the first point is touched through the user, the control unit 130 may calculate the length L of the user input by calculating a distance between the first point and the second point.

The drag operation of FIG. 3A may be performed consecutively from the activation operations of the second region in FIGS. 2A and 2B. For example, in response to the second region being activated after the activation region 143 is touched through the user for a preset time in FIG. 2A, the activation operation of the second region and the drag operation for displaying an icon may be consecutively performed through downward dragging operation in a state that the activation region is touched. The activation operation of the second region and the drag operation for displaying an icon may be consecutively performed through downward dragging operation in a state that the activation region is touched after the activation 144 is touched in FIG. 2B.

The touch operation of FIG. 3B may be performed consecutively after the activation operation of the second region in FIG. 2A. For example, in response to the second region being activated after the activation region 143 is touched for a preset time in FIG. 2A, the control unit 130 recognizes the user touch on the activation region as a touch on the first point. Then, in response to any one point of the second region being touched through the user, the control unit 130 may recognizes the touch as a touch on the second point. The control unit 130 may calculates a distance between the first point and the second point as the length of the user input. The activation operation of FIG. 2A and the touch operation for displaying an icon may be performed in connection with each other such an operation.

The activation operations in FIGS. 2A and 2B and the user touch operations for displaying an icon in FIGS. 3A and 3B are consecutively performed and thus the user operation for searching for an application may be simplified and the time consumed in searching for a desired application may be reduced.

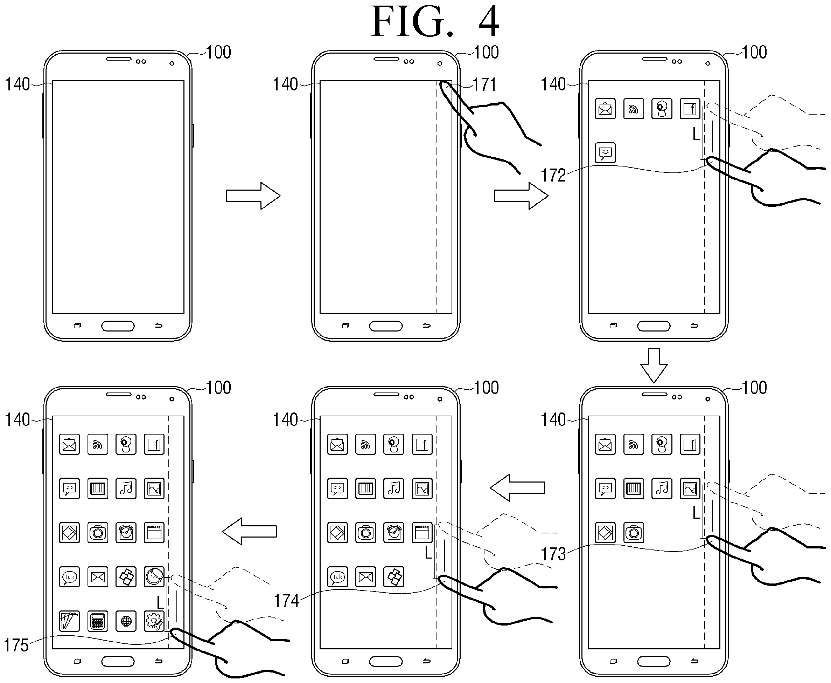

FIG. 4 is a diagram illustrating an example that the variable number of icons are displayed in a screen according to a length of a user input according to an embodiment of the present invention.

Referring to FIG. 4, in response to the user touch being input and a drag operation to a specific direction being performed, the control unit 130 may calculate the length of the user input by receiving information for the user touch operation from the sensing unit 120.

The control unit 130 may controls the display unit to display a portion or all of a plurality of icons corresponding to a plurality of applications in the screen mounted on the display unit 110. The control unit 130 may variably control the number of icons displayed in the screen mounted on the display unit 110 according to the length of the user input.

For example, the drag operation of the user being performed from a point 171 to which the user touch is input, the control unit 130 calculates the length of the user input. In response to the user touch reaching a point 172 and the length of the user input reaching the preset length L, the control unit 130 may display the preset number of icons. It has been described in the embodiment that the icon is displayed by five, but this is not limited thereto.

In response to the length of the user input reaching the preset length L through the drag operation of the user from the point 172 to a point 173 in a state that five icons are displayed, five icons may be further displayed.

In response to the length of the user input reaching the preset length L through the drag operation of the user from the point 173 to a point 174 in a state that ten icons are displayed, five icons may be further displayed.

In response to the length of the user input reaching the preset length L through the drag operation of the user from the point 174 to a point 175 in a state that fifteen icons are displayed, five icons may be further displayed.

Here, the user touches on the points 171, 172, 173, 174, and 175 may be performed through one drag operation. That is, the icons may be sequentially displayed by a preset number through one drag operation from the point 171 to which the first user touch is input in the second region 142 to the point 175.

The user touches on the points 171, 172, 173, 174, and 175 may be performed through more than two drag operations. For example, the user may perform the drag operation from the point 171 to the point 173, take the hand off, and then touch the point 173 again and perform the drag operation to the point 175.

The preset number of icons may be sequentially displayed by a preset number even in response to the drag operation being performed again on the region on which the drag operation of the user is performed. For example, in response to the drag operation being performed from the point 171 to the point 173 through the user, the icons may be sequentially displayed by five and total ten icons may be displayed. In response to the drag operation being performed from the point 171 to the point 172 after the user takes the hand off the screen, five icons may be further displayed and thus total fifteen icons may be displayed.

It has been described that the point 171 to which the first user touch is input is located in an upper end region of the second region, but this is not limited thereto. That is, the point of the first user touch may be arbitrary point of the second region and the control unit 130 may calculate the length of the user input through the drag operation of the user from the first user touch on the arbitrary point of the second region.

It has been described in the embodiment that the icon is displayed through the drag operation, but this is not limited thereto. That is, in response to two touch operations being performed as described in FIG. 3B, the control unit 130 may calculate a distance between points to which touches are input and display the number of icons corresponding to the calculated distance.

It has been described in the embodiment that five icons per unit distance L are sequentially displayed, but this is not limited thereto. For example, the arbitrary number of icons may be sequentially displayed per unit distance L.

The number of icons sequentially displayed in the screen may be changed. For example, the number of icons displayed in the screen may be changed through a method of displaying three icons in response to the drag operation from the first touch point 171 to the point 172 being input, additionally displaying five icons in response to the drag operation from the point 172 to the point 173 being additionally input, and additionally displaying eight icons in response to the drag operation from the point 173 to the point 174 being additionally input.

The control unit 130 may determine the priority of the plurality of icons to be displayed in the screen and control the display unit 110 to sequentially display the priority-determined icons in the screen according to the length of the user input.

For example, the control unit 130 may determine the priority of the icons to be displayed corresponding to the applications based on use frequency of an application. In this example, the control unit 130 may determine the number of times that an application is used per unit time and calculate the use frequency of the application according to the determined result. The control unit 130 may sequentially display the icons corresponding to the applications by a preset number in descending order of the use frequency of the application.

The priority of the icons displayed in the screen corresponding to the applications may be determined based on a time elapsed from a last use time of an application. For example, the control unit 130 may determine the time elapsed from the last use time of the application and sequentially display the icons corresponding to the applications by a preset number in ascending order of the elapsed time from the last use time of the application.

The priority of the icons displayed in the screen corresponding to the applications may be determined based on a consumed amount of a battery in execution of an application. For example, the control unit 130 may determine the consumed amount of the battery in the execution of the application and sequentially display the icons corresponding to the applications by a preset number in ascending order of the consumed amount of the battery of the application.

It has been described in the embodiment that the icons are sequentially displayed from an upper end of the screen according to the priority, but this is not limited thereto. That is, the icons may be sequentially displayed in an arbitrary region of the screen according to the priority.

In the embodiment as described above, the icons are sequentially displayed by the preset number and thus the covering degree of the image, which is currently displayed in the screen, with the displayed icons may be minimized. The display device may give the priority to the icons and the display device may not simply display all the icons according to the priority but may sequentially display the icons in descending priority order. Accordingly, the time consumed in searching for the icon desired by the user may be reduced. The display device may sequentially display the icons according to the length of the user input and thus may provide the pleasure to the user in selecting the application.

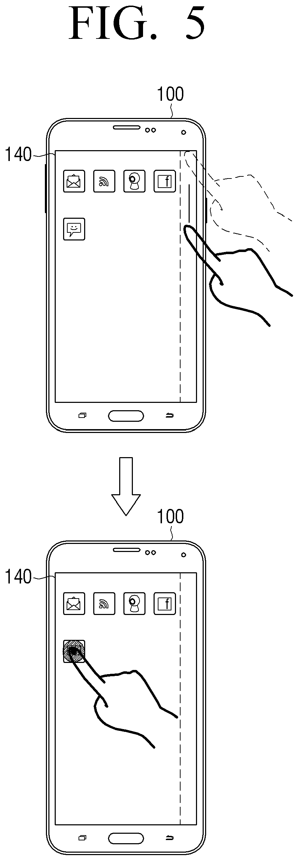

FIG. 5 is a diagram illustrating a method for executing an application by selecting a displayed icon according to an embodiment of the present invention.

Referring to FIG. 5, it can be seen that icons are displayed in the screen according to a drag operation of the user. The user may execute an application corresponding to a selected icon by selecting the icon displayed in the screen.

For example, separate images or an object may have been already displayed in the screen. In this example, in response to a touch on an icon being input through the user, the control unit 130 may recognize the user touch not as a touch for selecting the object displayed in the screen but as a touch for selecting an icon.

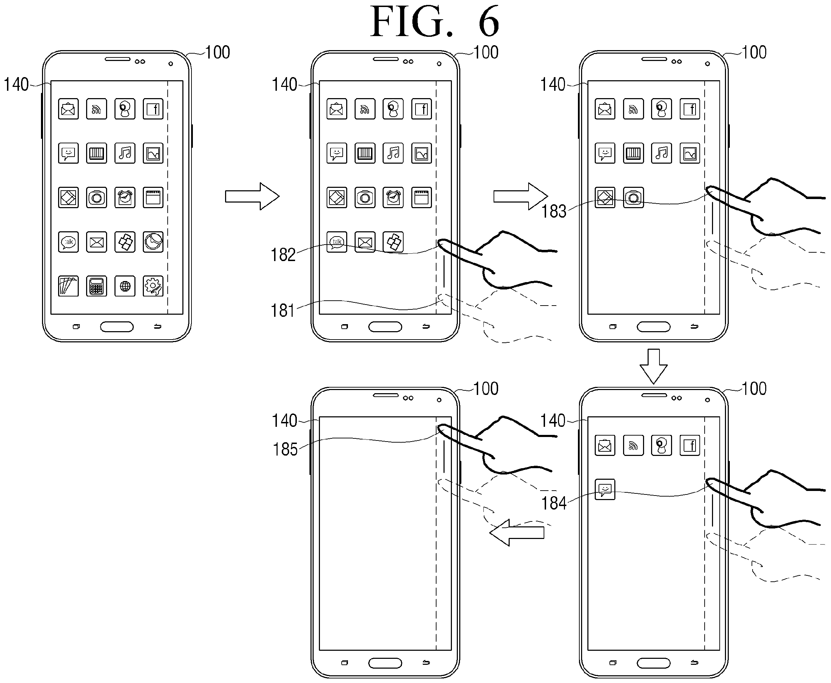

FIG. 6 is a diagram illustrating a method for returning to an existing screen without execution of an application according to an embodiment of the present invention.

Referring to FIG. 6, in response to a user touch being input and a drag operation to a specific direction being performed, the control unit 130 may calculate the length of the user input by receiving information for the touch operation of the user from the sensing unit 120.

For example, the control unit 130 may control the display unit to remove a portion or all of the icons displayed in the screen mounted on the display unit 110. In this example, the control unit 130 may variably control the number of icons to be removed from the screen mounted on the display unit 110 according to the length of the user input.

For example, in response to the drag operation of the user being performed from a point 181 to which a user touch is input in a state that twenty icons are displayed, the control unit 130 may calculate the length of the user input. In response to the user touch reaching a point 182 and then the length of the user input reaching a preset length L, the control unit 130 may control the preset number of icons to disappear. It has been described in embodiment that the icon disappears by five, but this is not limited thereto.

In response to a drag operation of the user being performed from the point 182 to a point 183 and the length of the user input reaching the preset length L in a state that fifteen icons are displayed, the control unit 130 may control five icons to additionally disappear.

In response to a drag operation of the user being performed from the point 183 to a point 184 and the length of the user input reaching the preset length L in a state that ten icons are displayed, the control unit 130 may control five icons to additionally disappear.

In response to a drag operation of the user being performed from a the point 184 to a point 185 and the length of the user input reaching the preset length L in a state that five icons are displayed, the control unit 130 may control five icons to additionally disappear.

It has been described in the embodiment that the process of displaying an icon in FIG. 4 is performed in reverse order to return to an existing screen, but this is not limited thereto. Through various operations, for example, a touch operation on a specific region, a rubbing operation for touching one point and then rubbing the one point, a long pressing operation for pressing one point of the second region for a critical time or more, a flicking operation for touching one point of the second region and then flicking fast to one direction, a tapping operation for slightly touting one point of the second region through a fingertip, and the like, the control unit may control the icons displayed in the screen to disappear and control the screen to return to an existing screen.

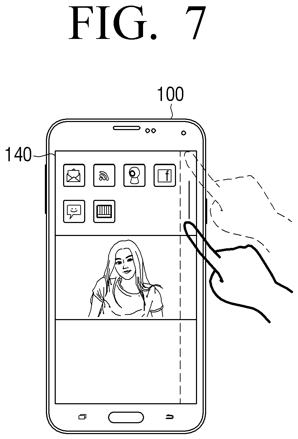

FIG. 7 is a diagram illustrating an example that an icon is displayed on an image displayed in a first region according to an embodiment of the present.

Referring to FIG. 7, the control unit 130 may control the display unit 110 to display a portion or all of a plurality of icons on the image displayed in the first region.

For example, FIG. 7 illustrates a screen that content is reproduced in the screen 140. Various types of images such as a home image, an icon image, a list image, an application execution image, a web browser image, and the like as well as the content reproduction image may be displayed in the screen 140. The control unit 130 may control the display unit 110 to display a portion or all of a plurality of icons on a currently displayed image in a state that the above-described various types of images are displayed.

In response to a user touch on an icon being input in a state that a separate image or an object is already displayed in the screen, the control unit 130 may recognize the user touch not as a touch for selecting the object displayed in the screen or a touch for controlling the display device 100 but as a touch for selecting the icon displayed in the screen.

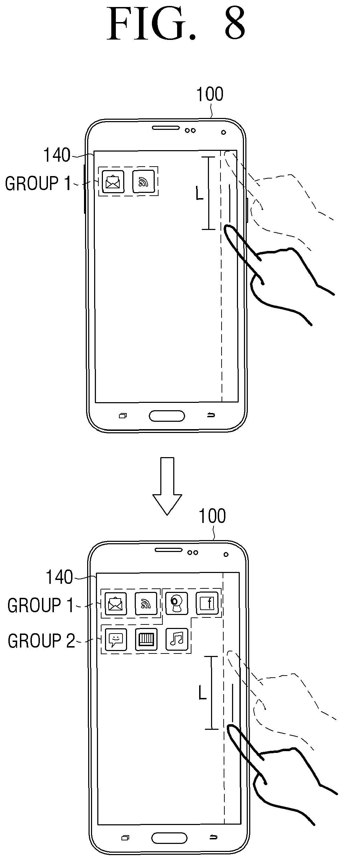

FIG. 8 is a diagram illustrating an example that the variable number of icon groups are displayed according to a length of a user input according to an embodiment of the present invention.

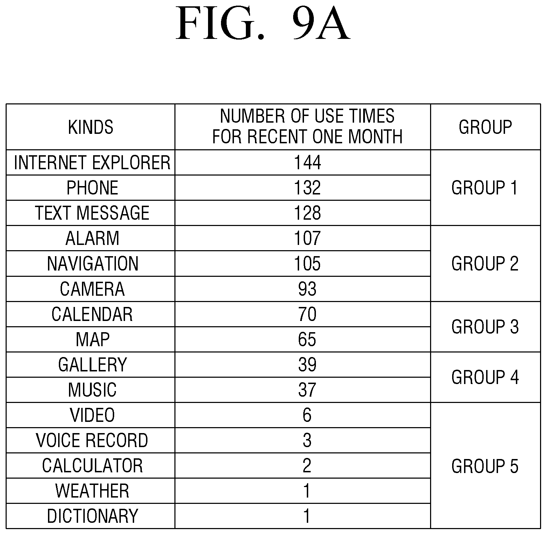

Referring to FIG. 8, the control unit 130 may divide a plurality of icons into a plurality of icon groups according a preset criterion and control the display unit 110 to display a portion or all of the plurality of divided icon groups in the screen. For example, the control unit 130 may generate the plurality of icon groups by dividing the plurality of icons for executing the plurality of applications installed in the display device 100 according to the preset criterion. The control unit 130 may control the display unit 110 to sequentially display the plurality of generated icon groups in the screen in group units according to the length of the user input. A method for generating the plurality of icon groups by dividing the plurality of icons according to the preset criterion will be described below in detail with reference to FIGS. 9A to 9C.

For example, the number of icon groups displayed in the screen may be variably determined according to the length of the user input. In this example, the control unit 130 may increase the number of icon groups displayed in the screen according to the increase of the length of the user input in the process of displaying the icon group in the screen.

For example, in response to the drag operation of the user being performed by the length L in FIG. 8, the control unit 130 displays icons divided into a group 1 in the screen. In response to the drag operation of the user being additionally performed by the length L, the control unit 130 may increase the number of icon groups displayed in the screen according to the increase of the length of the user input by additionally displaying icons divided into a group 2 in the screen.

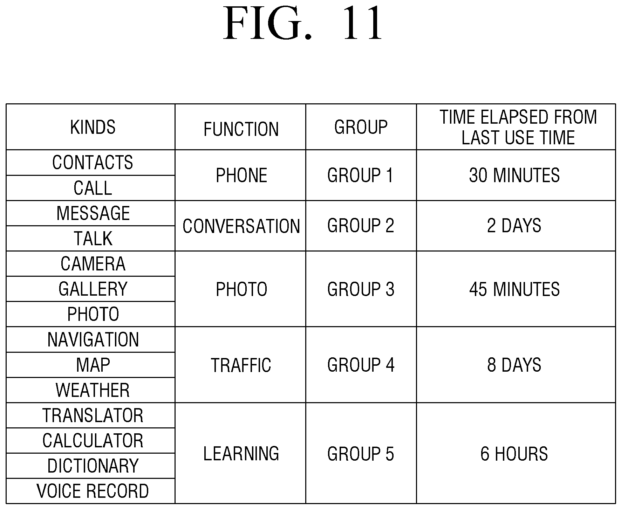

The control unit 130 may determine a priority of the plurality of icon groups and may additionally sequentially display the priority-determined icon groups according to the increase of the length of the user input. For example, the control unit 130 may determine the priority of the divided icon groups based on at least one of use frequency and the time elapsed from the last use time of a divided icon group and user setting. For example, the group 1 has a priority for display in the screen higher than that of the group 2 in FIG. 8. Accordingly, the control unit 130 may sequentially display the plurality of groups in order of group 1 and group 2 according to the increase of the length of the user input. A method for determining the priority of the icon groups will be described below in detail with reference to FIG. 11.

FIGS. 9A to 9C are diagrams illustrating methods of dividing a plurality of icons into a plurality of icon groups according to an embodiment of the present invention.

Referring to FIGS. 9A to 9C, the control unit 130 may divide a plurality of icons into a plurality of icon groups according to a preset criterion.

Referring to FIG. 9A, the control unit 130 may divide the plurality of icons into the plurality of icon groups according to use frequency of an application. For example, the control unit 130 may determine the number of times that an application is used per unit time (per one month in FIG. 9A) and calculate the use frequency of the application according to the determination result.

The control unit 130 may generate the plurality of icon groups by grouping icons corresponding to applications having a similar number of use times per unit time into one. For example, icons which have a difference in the number of times that an application is used per unit time larger than a preset number may be divided into another group. In this example, as illustrated in FIG. 9A, the control unit may arrange applications according to the number of use times, divide applications having the difference in the number of use times larger than 20 into separate groups, and divide applications having the difference in the number of use times smaller than 20 into the same group.

Accordingly, the icons corresponding to the plurality of applications installed in the display device 100 may be divided into the plurality of icon groups.

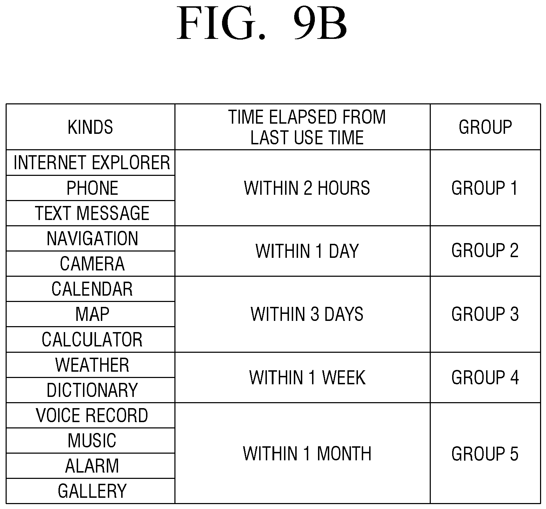

Referring to FIG. 9B, the control unit 130 may divide the plurality of icons into the plurality of icon groups according to the time lapsed from a last use time. For example, the control unit 130 may generate the plurality of icon groups by grouping icons corresponding to applications having a similar time lapsed from the last use time into one. In this example, as illustrated in FIG. 9B, the control unit 130 may divide the icons by grouping icons that the time elapsed from the last use time is within two hours as a group 1, grouping icons that the time elapsed from the last use time is within one day as a group 2, grouping icons that the time elapsed from the last use time is within three days as a group 3, grouping icons that the time elapsed from the last use time is within a week as a group 4, and grouping icons that the time elapsed from the last use time is within one month as a group 5.

Although not shown in drawings, the control unit 130 may calculate a consumed amount of a battery in execution of an application and generate the plurality of icon groups by grouping icons corresponding to applications having a similar consumed amount of a battery in execution of the application into one in a similar manner to the methods of FIGS. 9A and 9B.

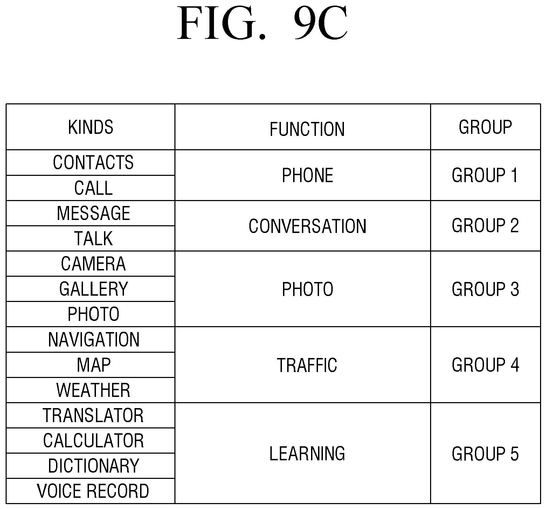

As illustrated in FIG. 9C, the control unit 130 may divide a plurality of icons into a plurality of icon groups according to a function of an application corresponding to an icon. For example, the control unit 130 may divide the icons by grouping applications for performing a phone function into one as a group 1, grouping applications for performing a conversation function into one as a group 2, grouping applications for performing a photo function into one as a group 3, grouping applications for performing a traffic information function into one as a group 4, and grouping applications for performing a learning function into one as a group 5.

As illustrated in FIGS. 9A to 9C, the display device may group a plurality of icons having similarity into one group and sequentially display the groups and thus provide an environment that the user easily searches for the desired icon.

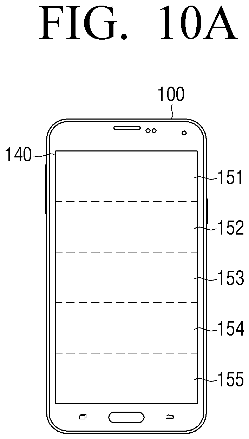

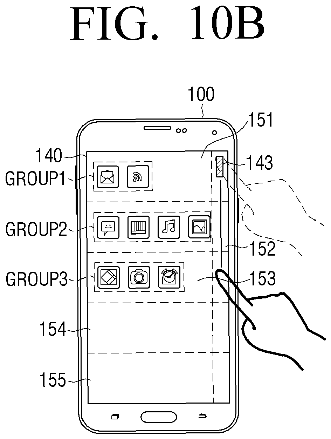

FIGS. 10A and 10B are diagrams illustrating an example that displays a plurality of icon groups by sequentially adding the plurality of icon groups to a plurality of regions of a first region according to a priority according to an embodiment of the present invention.

Referring to FIG. 10A, the screen 140 may be divided into a plurality of regions 151, 152, 153, 154, and 155 through a plurality of boundary lines parallel to an upper end of the screen.

Referring to FIG. 10B, the control unit 130 may control the display unit 110 to display the priority-determined icon groups by sequentially adding the priority-determined icon groups from the uppermost region of the plurality of regions to the lowermost region thereof according to the priority in response to the length of the user input being increased.

For example, in response to the activation region 143 being touched for a preset time, the second region 142 may be activated and icons of the group 1 may be displayed in the region 151.

A drag operation of the user being additionally performed downward in a state that the icons of the group 1 are displayed, icons of the group 2 may be displayed in the region 152.

A drag operation of the user being additionally performed downward in a state that the icons of the groups 1 and 2 are displayed, icons of the group 3 may be displayed in the region 153.

Icons of the groups 4 and 5 may be displayed in the regions 154 and 155 through the same method as the above-described method.

The control unit 130 may control the display unit 110 to display the priority-determined icon groups by sequentially adding the priority-determined icon groups from the uppermost region of the plurality of regions to the lowermost region thereof according to the priority through such a manner in response to the length of the user input being increased.

It has been described in the embodiment that the plurality of regions are divided through the boundary lines parallel to the upper end of the screen and the heights of the plurality of region are equal to each other, but this is not limited thereto. That is, the plurality of regions may be divided through boundary lines parallel to a side surface of the screen or may have different heights from each other. The plurality of regions may be divided through other arbitrary methods.

FIG. 11 is a diagram illustrating a method for determining a priority of the plurality of icon groups according to an embodiment of the present invention.

In response to the plurality of icon groups being divided through use frequency of an application, the priority of the plurality of icon groups is determined according to user frequency of an application corresponding to an icon included in an icon group. For example, in FIG. 9A, the group 1 has the highest priority for display in the screen 140 and the group 5 has the lowest priority for display in the screen 140.

In response to the plurality of icon groups being divided through a time elapsed from a last use time, the priority of the plurality of icon groups are determined according to a time elapsed from a last use time of an application corresponding to an icon included in an icon group. For example, in FIG. 9B, the group 1 has the highest priority for display in the screen 140 and the group 5 has the lowest priority for display in the screen 140.

Similarly, in response to the plurality of icon groups being divided through a consumed amount of a battery, an icon group corresponding to an application having the smallest consumed amount of a battery has the highest priority and an icon group corresponding to an application having the largest consumed amount of a battery has the lowest priority.

In response to the plurality of icon groups being divided through a function of an application, the priority of the icon group may be determined through use frequency of an application corresponding to an icon included in the group, a time elapsed from a last use time of the application, a consumed amount of a battery, and the like. The priority of the plurality of icon groups may be determined by calculating the use frequency of applications corresponding to icons included in one icon group. As illustrated in FIG. 11, the priority of the plurality of icon groups may be determined according to the time elapsed from the last use time of the application corresponding to the icon included in the icon group. The priority of the plurality of icon groups may be determined by calculating the consumed amounts of batteries of applications corresponding to the icons included in one icon group

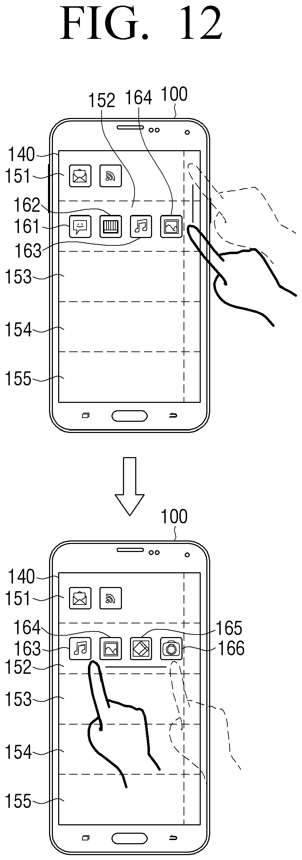

FIG. 12 is a diagram illustrating a method of viewing a plurality of icons included in one icon group.

A plurality of icons may be included in one icon group. The number of icons included in the one icon group may be larger than the number of icons to be displayed in one region. For example, as illustrated in FIG. 12, four icons may be displayed in each of the plurality of icons 151, 152, 153, 154, and 155 into which the screen is divided, but the number of icons 161, 162, 163, 164, 165, and 166 of the group displayed in the region 152 is six and is larger than the number of icons to be displayed in one region. Accordingly, only four icons 161, 162, 163, and 164 is displayed in the region 152.

In this example, as illustrated in FIG. 12, icons which are not first displayed may be displayed by performing a drag operation on the second region 152. For example, all the icons included in the group displayed in the region 152 may be displayed through a method of removing the icons 161 and 162 and newly displaying the icons 165 and 166 according to a drag direction of the user.

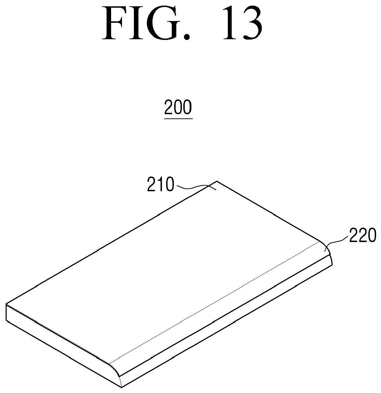

FIGS. 13 5o 15 are diagrams illustrating a configuration example of a display device mounted with a bended touch screen according to an embodiment of the present invention.

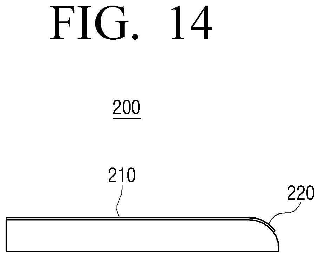

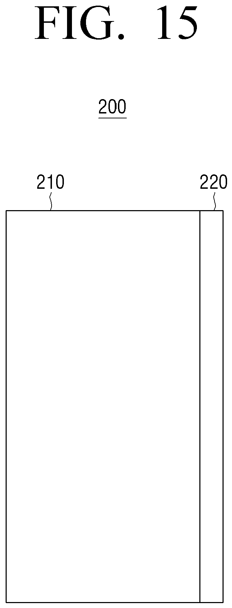

FIG. 13 is a perspective view of a display device 200 mounted with a bended touch screen, FIG. 14 is a diagram illustrating a cross-sectional configuration of the display device 200 mounted with the bended touch screen, and FIG. 15 is a plan view of the display device 200 mounted with the bended touch screen.

Referring to FIGS. 13 to 15, a screen mounted on the display device 200 may be divided into a flat region and a bended region and the first region may be formed in the flat region and the second region may be formed in the bended region. For example, the screen mounted on the display device 200 may be a bended touch screen having a flat region 210 and a bended region 220. In this example, the first region may be formed in the flat region 210 of the bended touch screen and the second region may be formed in the bended region 220 of the bended touch screen.

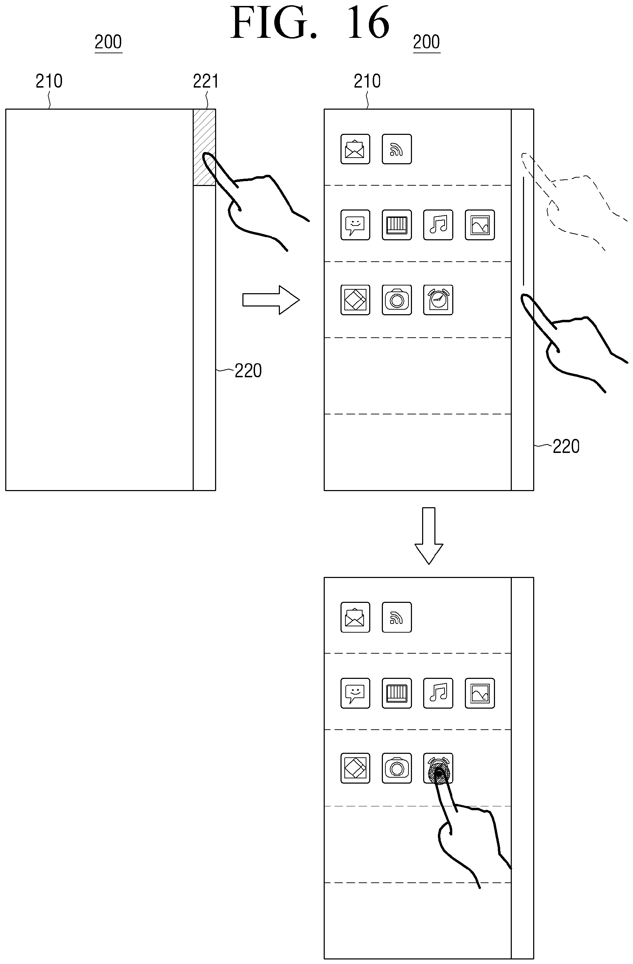

FIG. 16 is a diagram illustrating an example that the variable number of icons are displayed in a screen using the bended region 220 of the bended touch screen according to an embodiment of the present invention.

In the embodiment, the second region to which a user touch for displaying an icon is input may be formed in the bended region 220 of the bended touch screen. That is, the first region in which an image for presenting an icon is displayed and the second region to which a user touch for displaying an icon is input may be separated from each other. Accordingly, the activation region is not formed in the first region as illustrated in FIGS. 2A and 2B and the activation region 221 is formed in the bended region 220, and thus the activation region may be displayed without the covering of an image currently displayed in the first region. The user touch is performed on the bended region 220 and thus the image currently displayed in the first region may not be covered with a finger and the like.

The operation method described in FIGS. 1 to 12 may be intactly applied to an operation method of the display device 200 mounted with the bended touch screen and thus detailed description thereof will be omitted.

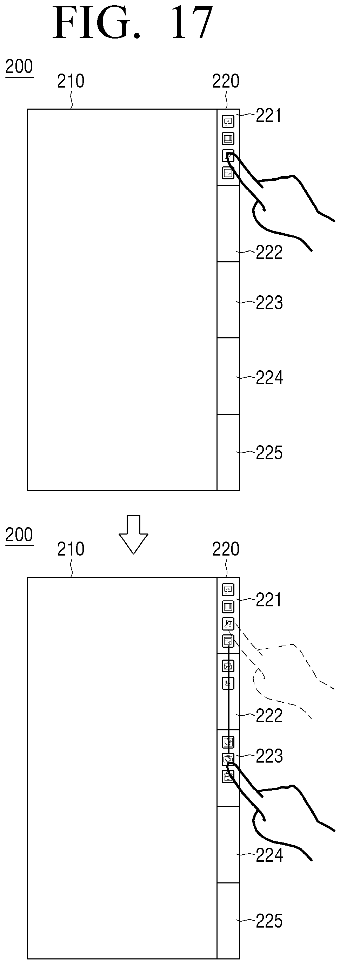

FIG. 17 is a diagram illustrating an example that the variable number of icons are displayed in a bended region of a bended touch screen according to an embodiment of the present invention.

Referring to FIG. 17, the control unit 130 may control the display unit 110 to display a portion or all of a plurality of icons in the second region formed in the bended region of a bended touch screen. For example, the control unit 130 may display an icon in the second region formed in the bended region of the bended touch screen and in this example, the number of displayed icons may be variably determined according to the length of the user input.

As described in FIGS. 9A to 9C, the plurality of icons may be divided into the plurality of icon groups. As described in FIG. 11, the priority for the divided icon groups may be determined.

The user may activate the second region by touching the activation region 221 of the second region for a preset time. In response to the second region is activated, the control unit 130 may display the icons divided into the plurality of groups described in FIGS. 9A to 9C in the region 221. In response to a drag operation being performed from the region 221 to which the user touch is input to a region 222, the control unit 130 may additionally display the icon group in the region 222.

In response to a drag operation being performed from the region 222 to a region 223, the control unit 130 may additionally display the icon group in the region 223.

In response to a drag operation being performed from the region 223 to a region 224, the control unit 130 may additionally display the icon group in the region 224.

In response to a drag operation being performed from the region 224 to a region 225, the control unit 130 may additionally display the icon group in the region 225.

The control unit 130 may determine the priority for the icon groups and display the plurality of icon groups by sequentially adding the plurality of icon groups from the uppermost region 221 to the lowermost region 225 according to the priority as the drag operation moves from the region 221 and the region 225.

In the embodiment, the icons corresponding to the plurality of applications are displayed in the bended region and thus the icons may be displayed without the covering of the image displayed in the first region.

Even in response to the flat region of the bended touch screen being in a nonconductive state, the control unit may display the icons only in the second region to execute the application and thus the power consumption may be reduced.

As the icon groups are displayed according to the priority, the user may fast search for the execution-desired application and select the searched application.

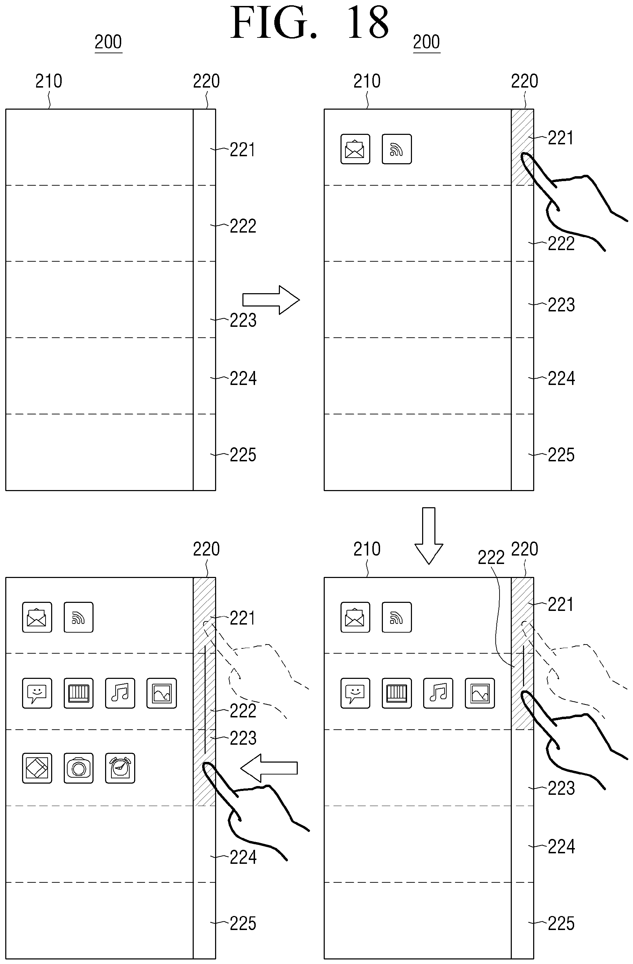

FIG. 18 is a diagram illustrating screen change of a bended region according to a user touch.

Referring to FIG. 18, color of a region on which a user drag operation is performed may be changed. Accordingly, the visual pleasure may be provided to the user which performs a touch operation for displaying an icon.

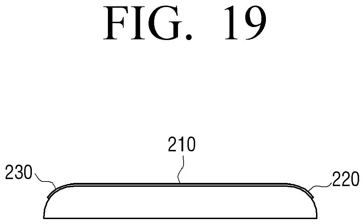

FIG. 19 is a diagram illustrating a configuration example of a bended touch screen according to another embodiment.

Referring to FIG. 19, a bended touch screen including one flat region 210 and two bended regions 220 and 230 may be mounted on a display device 300.

In this example, a portion or all of a plurality of icons corresponding to a plurality of applications may be displayed in any one region of the flat region 210 and the two bended regions 220 and 230. Any one of the two bended regions 220 and 230 may be set only to perform a function as a region to which a user input for displaying an icon is input.

It has been described in FIGS. 13 to 15 that one bended region is provided and it has been described in FIG. 19 that two bended regions are provided, but this is not limited thereto. For example, the display device 200 may be mounted with a bended touch screen including bended regions in the left and right sides and the upper and lower sides of the flat region. Any one of the bended regions may be set only to perform a function as a region to which a user input for displaying an icon is input.

It has been described in the embodiments that the plurality of icons for executing the plurality of application are displayed, but this is not limited thereto. For example, the display device may be implemented through a method for determining the priority for icons corresponding to applications related to a currently executed application according to the degree of relevance and sequentially displaying the priority-determined icons according to the length of the user input. For example, in response to a camera application being currently executed, the control unit 130 may control the display unit 110 to display icons corresponding to a gallery application, a photo application, and the like related to the camera application through a touch operation on the second region. In this example, the control unit may determine the priority for displaying the icons corresponding to the gallery or photo application based on the number of times that the gallery or photo application is used in connection with the camera application.

In response to content being reproduced, the display device may be implemented through a method for displaying pieces of other content related to the reproduced content according to the priority. For example, in response to a specific moving image being reproduced in the display device 200, the display device may be implemented through a method for searching for moving images related to the reproduced moving image on a web site, determining the priority of the related moving images according to the number of hit times of the related moving images, and sequentially displaying the priority-determined related moving images according to the length of the user input.

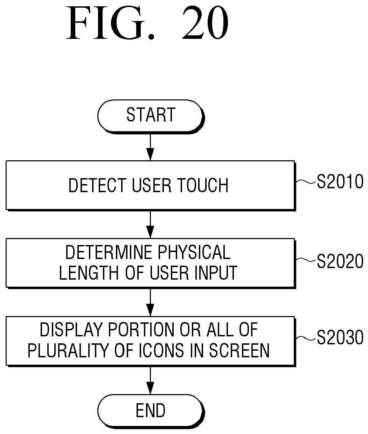

FIG. 20 is a flowchart illustrating a display method according to an embodiment of the present invention.

Referring to FIG. 20, first, the control unit 130 detects a user touch on a second region to which the user touch is input (S2010). For example, the control unit 130 may detect various operations such as a general touch operation for touching a screen using a finger of the user or other objects, a general hovering operation for approaching a finger and the like near the screen, a pen touch operation for touching the screen using a pen, a pen hovering operation for approaching a pen near the screen, and the like.

A length of the user input is determined according to the detected user touch (S2020). For example, the control unit 130 may receive information for a touch operation of the user from the sensing unit 120 and calculate the length of the user input.

Finally, the control unit 130 displays a portion or all of a plurality of icons corresponding to a plurality of applications (S2030). For example, the plurality of applications which perform various function may be installed in the display device 100 and the icons for executing the plurality of applications may be presented. All the icons may be displayed in a screen mounted on the display unit 110 and only a portion of the icons may be displayed in the screen mounted on the display unit 110.

In this example, the number of icons displayed in the screen is variably determined according to the determined length of the user input. For example, the number of icons displayed in the screen may be increased according to the increase of the length of the user input in the process of displaying the icons in the screen. The number of icons displayed in the screen may be reduced according to the increase of the length of the user input in the process of removing the icons displayed on the screen from the screen.

The foregoing exemplary embodiments and advantages are merely exemplary and are not to be construed as limiting the present inventive concept. The description of the exemplary embodiments is intended to be illustrative, and not to limit the scope of the claims, and many alternatives, modifications, and variations will be apparent to those skilled in the art.

## Claims

1. A display device comprising:
a display unit mounted with a screen having a first region in which an image is displayed and a second region to which a user touch is input,
a sensing unit configured to detect the user touch on the second region; and
a control unit configured to determine a length of a user input by analyzing the detected user touch and control the display unit to display a portion or all of a plurality of icons corresponding to a plurality of applications on the screen,
wherein the number of icons displayed in the screen is variably determined according to the determined length of the user input.

2. The display device according to claim 1, wherein the control unit controls the display unit to display the portion or all of the plurality of icons on an image displayed in the first region.

3. The display device according to claim 1, wherein the control unit divides the plurality of icons into a plurality of icon groups according to a preset criterion and controls the display unit to display a portion or all of the plurality of divided icon groups in the screen, and
the number of icon groups displayed in the screen is variably determined according to the determined length of the user input.

4. The display device according to claim 3, wherein the preset criterion is at least one of use frequency of an application, a time elapsed from a last use time of the application, a consumed amount of a battery in execution of the application, and a function of the application.

5. The display device according to claim 3, wherein the first region includes a plurality of regions divided by a plurality of boundary lines parallel to an upper end of the screen, and
the control unit determines a priority for the plurality of icon groups and controls the display unit to display the priority-determined icon groups by sequentially adding the priority-determined icon groups according to the priority from an uppermost region of the plurality of regions to a lowermost region thereof in response to the length of the user input being increased.

6. The display device according to claim 5, wherein the control unit determines the priority of the plurality of divided icon groups based on at least one of use frequency of a divided icon group, a time elapsed from a last use time of the divided icon group, and user setting.

7. The display device according to claim 1, wherein the screen includes an activation region for activating the second region, and
the control unit activates the second region in response to the user touch being input to the activation region for a preset time.

8. The display device according to claim 1, wherein the screen is divided into a flat region and a bended region and the first region is formed in the flat region and the second region is formed in the bended region.

9. The display device according to claim 8, wherein the control unit controls the display unit to display the portion or all of the plurality of icons in the second region.

10. A display method of a display device mounted with a screen having a first region in which an image is displayed and a second region to which a user touch is input, the display method comprising the steps of:
detecting the user touch on the second region;
determining a length of a user input by analyzing the detected user touch; and displaying a portion or all of a plurality of icons corresponding to a plurality of applications in the screen,
wherein the number of icons displayed in the screen is variably determined according to the determined length of the user input.

11. The display method according to claim 10, wherein the step of displaying the portion or all of the plurality of icons includes displaying the portion or all of the plurality of icons on the image displayed in the first region.

12. The display method according to claim 10, further comprising the steps of:
dividing the plurality of icons into a plurality of icon groups according to a preset criterion; and
displaying a portion or all of the plurality of divided icon groups in the screen, wherein the number of icon groups displayed in the screen is variably determined according to the determined length of the user input.

13. The display method according to claim 12, wherein the preset criterion is at least one of use frequency of an application, a time elapsed from a last use time of the application, a consumed amount of a battery in execution of the application, and a function of the application.

14. The display method according to claim 12, wherein the first region includes a plurality of regions divided by a plurality of boundary lines parallel to an upper end of the screen, and
the step of displaying the portion or all of the plurality of divided icon groups includes determining a priority for the plurality of icon groups and displaying the priority-determined icon groups by sequentially adding the priority-determined icon groups according to the priority from an uppermost region of the plurality of regions to a lowermost region thereof in response to the length of the user input being increased.

15. The display method according to claim 14, wherein the step of displaying the portion or all of the plurality of divided icon groups includes determining the priority of the plurality of divided icon groups based on at least one of use frequency of a divided icon group, a time elapsed from a last use time of the divided icon group, and user setting.
